(19) Europäisches Patentamt

European Patent Office

Office européen des brevets

(11) EP 1 506 719 A1

(12) EUROPEAN PATENT APPLICATION

(43) Date of publication:
16.02.2005 Bulletin 2005/07

(51) Int Cl.7: **A23L 3/3436**, B01J 20/02, B01J 20/04

(21) Application number: 04019007.6

(22) Date of filing: 11.08.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **12.08.2003 JP 2003292140**

(71) Applicant: **MITSUBISHI GAS CHEMICAL COMPANY, INC.**
**Chiyoda-ku, Tokyo (JP)**

(72) Inventors:
• **Nakata, Takashi, Mitsubishi Gas Chemical Katsushika-ku Tokyo (JP)**
• **Iwai, Tatsuo, Mitsubishi Gas Chemical Katsushika-ku Tokyo (JP)**
• **Seki, Takahiro, Mitsubishi Gas Chemical Katsushika-ku Tokyo (JP)**

(74) Representative:
**Gille Hrabal Struck Neidlein Prop Roos Patentanwälte**
**Brucknerstrasse 20**
**40593 Düsseldorf (DE)**

(54) **Oxygen absorber composition, oxygen absorber packaging and oxygen absorption method**

(57)    In the present invention, an oxygen absorber agent composition comprises 100 parts by weight of iron powder and 0.1 parts by weight or more of a promoter comprising an alkali metal salt or alkali earth metal salt having low moisture-transportation properties. An oxygen absorber composition packaged device is prepared by packaging the oxygen absorber composition in gas permeable packaging material, and manifests oxygen absorption function for long periods of time under high humidity conditions and offers an oxygen absorber agent composition that prevent generation of rust, and using that oxygen absorber composition packaged device, oxygen in a gas barrier vessel is removed effectively even under conditions of high humidity.

Preferable alkali metal salts or alkali earth metal salts have the characteristics that 5% aqueous solutions of the salts are in equilibrium with an atmosphere having a relative humidity of 99.0% or more at 25°C.

EP 1 506 719 A1

**Description**

FIELD OF THE INVENTION

The present invention relates to an oxygen absorbing agent with the ability to absorb oxygen. More specifically, together with the absorptive capacity vis a vis the apparent volume being large, and the ability to maintained a large oxygen absorption capacity over long periods of time even at high humidity, it is related to an oxygen absorber composition that van guard against the generation of rust water, oxygen absorber packaging that forms the packaging thereof, and a method for removing the oxygen from inside a vessel that uses the aforesaid oxygen absorber composition.

BACKGROUND TECHNOLOGY

Oxygen absorbers using the oxidation reaction of iron powder have been sealed with a product such as food inside a gas barrier vessel and removing the oxygen from within the vessel, preserving the quality and freshness of the goods so preserved such as food, are known and have been widely used.

The oxygen absorber agents use the reaction between iron and oxygen in the presence of moisture and to promote the oxidation reaction of the iron, in many cases, iron type compositions are used to which sodium chloride or calcium chloride or metal chlorides such as have been added as promoters. The form of the oxygen absorber agent in addition to small bags or sachets where the iron type composition has been packaged in gas permeable packaging material, includes sheets or films into which the iron type composition has been mixed with resin and sheets or films for packaging where the oxygen absorbing layer made of a mixture of the iron composition and a resin, a gas barrier layer and an oxygen permeable layer have been affixed to create a multilayer structure.

For example, in Japanese Patent Number S56-33980 an oxygen absorber comprising an iron powder coated with a metal halide compound is disclosed. This material is illustrated by the use of a metal bromide or a metal iodide or the like as one of the oxygen absorption reaction accelerators. However, neither an alkali metal salt nor an alkali earth metal salt where the equilibrium relative humidity for a 5% by weight aqueous solution at twenty five degrees (25°C) is ninety nine (99%) percent relative humidity or more is not disclosed.

Japanese Patent Number S57-31449 discloses an oxygen absorber agent supplying the moisture necessary for the oxygen absorption reaction by means of a moisture source such as an inorganic filler impregnated with an aqueous metal halide solution. This oxygen absorber agent is a self-reacting type oxygen absorber used in dried foods and the like where there is not much moisture content, and as the metal halide, sodium bromide and potassium iodide are disclosed. However, that oxygen absorber compositions containing the alkali metal salts or alkali earth metal salts which has an equilibrium relative humidity of 99.0% RH in 5% aqueous solution or more that can demonstrate effectiveness as oxygen absorbers under conditions of high humidity has not been disclosed in the prior art.

Japanese Laid Open Patent Application Number H10-309427 discloses an oxygen absorber agent composition used under low humidity conditions where the relative humidity is seventy (70%) percent or less containing a reduced metal and at least one member taken from the group of metal iodide compounds and metal bromide compounds. In this laid open patent application, sodium bromide and potassium bromide are given as examples of the metal halide, however, neither an alkali metal salt nor an alkali earth metal salt where the equilibrium relative humidity of 99.0% or more exists for a five (5wt%) weight percent solution at twenty five (25) degrees is disclosed.

The inventors of the present invention, as a result of their investigation into the activity of an oxygen absorption reaction under conditions of high humidity of an oxygen absorber agent comprising iron powder and a promoter, combined sodium chloride and potassium chloride as the promoter and they observed the oxygen absorber agent, which like those of the prior art that use the iron oxidation reaction, together with promoting the oxidation reaction, has the fine iron particles of the oxidized component clump together in masses. By promoting this clumping together of particles, the inventors discovered the problem that the total surface area of the iron particles was reduced and because the oxidation reaction inside these masses did not proceed effectively, the amount of the oxygen absorber as a part of the total amount of material in the oxygen absorber composition was much smaller compared to the theoretical value.

When an oxygen absorber using the oxidation reaction of iron powder is applied to a food containing a large volume of moisture and where the moisture activity is high, the problem exists that by transferring moisture inside the packaging of the oxygen absorber agent, the oxygen absorber agent's surface becomes covered by moisture the oxidation reaction effectively ceases. Up until now, to eliminate this problem, inorganic fillers such as silica or zeolite were added in large quantities so that by dispersing the moisture the power of the oxygen absorbing agent was preserved. However by adding an inorganic filler, the preservation of this power is improved, but the total amount of the oxygen absorbing agent composition as compared with the amount of oxygen absorbed is large, the dimensions of the packaging for the oxygen absorber are also large and there is the problem of increased cost.

The present invention solves the aforementioned problems of oxygen absorber agents described in the prior art and has the objective of providing an oxygen absorber with a high oxygen absorption capacity per unit volume, prevention of the production of rust water, and that can maintain high oxygen absorption capacity even under high humidity after long periods.

DISCLOSURE OF THE INVENTION

The inventors of the present invention through the accumulated results of research directed at solving the aforementioned problems have discovered that it is possible, by using an oxygen absorber agent composition containing alkali metal halides and alkali earth metal halides with low moisture transport from high humidity atmospheres, to preserve oxygen absorption power where the rate of transfer of moisture to the oxygen absorber composition is low even when there is a high humidity atmosphere. In particular this kind of alkali metal salts or alkali earth metal salts, the iron powder became over all swelled out as puffy particles, clumping was prevented, and the surfaces of the particles were not covered by moisture and together with oxidation continuing effectively to the center of the particles, the formation of rust water was prevented and so the present invention was achieved.

That is to say, the present invention is an oxygen absorber agent composition where for iron powder present in the amount of 100 parts by weight 0.1 parts by weight of a promoter comprising an alkali metal salt or an alkali earth metal salt where the transportability of moisture from a high humidity atmosphere is low. In the present invention, the alkali metal salt or the alkali earth metal salt having low transportability of moisture from a high humidity atmosphere is a salt whereby a five (5%) percent aqueous solution at 25 degrees the equilibrium relative humidity is ninety nine (99%) or more.

Moreover, the present invention is an oxygen absorber packaging for the aforementioned oxygen absorber agent comprising packaging using gas permeable packaging materials and is a method whereby using this packaging an oxygen absorption method under high humidity atmospheres of from 70% to 100% inside the gas barrier vessel is achieved.

THE PREFERRED EMBODIMENTS FOR PRACTICE OF THE INVENTION

Below the method of this invention will be explained in detail. As to the iron particles which form the main part of the oxygen absorber agent, they are not particularly limited as long as the surface is exposed, and reduced iron powder, electrolyzed iron powder and atomized iron particles are all ideally used. In addition it is also possible to use powders or filings of cast iron or the like. For the iron powder used to have a size suitable to the optimal absorption of oxygen normally will have an average diameter of 1 mm or less, preferably 500 microns or less and more preferably 100 microns or less.

Generally when using an oxygen absorber agent package under high humidity conditions, transportation of moisture occurs by passage of water vapor through the gas permeable packing material (packing material) of the oxygen absorber to the interior of the oxygen absorber packaging. The passage of water vapor depends on the difference in the humidity on both sides of the packaging and movement occurs from outside of the high humidity region to the inside of the low humidity region. The passage of vapor into the inside of the packaging of the oxygen absorber dissolves the salts added to iron powder and aqueous solutions of salts are formed locally. In case the equilibrium humidity of the aqueous solution of the salt is low, further vapor is transferred. As a result, the salt dissolved in solution is diluted and the equilibrium humidity is increased. Until within the packaging of the oxygen absorber agent composition the equilibrium humidity rises to the level of the humidity outside the packaging of the oxygen absorber, the transport of water vapor across the packaging material from outside of the packaging to the inside of the oxygen absorber packaging continues. If the amount of water vapor transported from outside the oxygen absorber packaging, that is to say the amount of moisture transported into the oxygen absorber, is large, the oxygen absorber is covered with water and a lowering of the oxygen absorption function occurs.

In the present invention, to guard against this, it is desirable to use an alkali metal salt or an alkali earth metal salt as the promoter that has a low capacity for the transportation of moisture from a high humidity atmosphere to its aqueous salt solution. Concretely, what are used as promoters are alkali metal salts and alkali earth metal salts that when in a five (5%) percent by weight solution at twenty five (25°C) degrees maintain a relative humidity equilibrium of ninety nine (99%) percent or more. The alkali metal salts and alkali earth metal salts cause a low level of transportation of moisture from a high humidity atmosphere. Such metal salts and alkali metal salts include the halides and calcium bromide is preferred.

Among the salts that are mixed into the oxygen absorber agent composition are those that when in a five (5%) percent by weight solution at twenty five (25) degrees maintain a relative humidity equilibrium of ninety nine (99%) percent or more when used in a high humidity environment result in a particularly low moisture transportation. Moreover, even if inorganic fillers are not added, the oxygen absorber composition is protected against clumping into masses after absorption of oxygen, and decrease of the oxygen absorbing capacity or the generation of rust water does not occur, the use of these salts is preferred. Among these, calcium bromide is preferred because, when it is used as a promoter of iron type oxygen absorber compositions, the volume of moisture transported from a high humidity atmosphere is very small and the oxygen absorbing capacity of the oxygen absorber composition as a whole is excellent.

The combined amount of alkali metal salts or alkali earth metal salts that in five (5%) percent by weight solution at twenty five (25) degrees maintain a relative humidity equilibrium of ninety nine (99%) percent or more, or is simple referred to as the salts of low moisture transportation is equal to or greater than 0.1 parts by weight of salt to 100 parts by weight of iron powder, preferably 0.1 parts by weight of salt to 0.9 parts by weight of salt to 100 parts by weight of iron powder, more preferably 0.3 parts by weight of salt to 0.9 parts by weight of salt to 100 parts by weight of iron powder and most preferably 0.5 parts by weight of salt to 0.8 parts by weight of salt to 100 parts by weight of iron powder. If the combined volume of alkali metal salts or alkali earth metal salts is to low, because the rate of oxygen absorption by the oxygen absorber agent will be too low, it would not be preferred for preserving foods whose quality degrades quickly.

If the combined volume of alkali metal salts or alkali earth metal salts is too high, under a high humidity atmosphere, the phenomenon of clumping will occur together with oxidation, the oxygen absorption capacity per the total volume of the oxygen absorber composition will be too low, and in some cases, the evolution of rust may occur.

In particular, if the alkali metal salts or the alkali earth metal salts are bromide salts, the amount is within the range of 0.5 to 0.8 parts by weight of salt per 100 parts by weight of iron powder, and the amount of oxygen absorbed (ml of oxygen /g of oxygen absorber agent composition 7 days later) from a high humidity atmosphere is 230 ml/g, even, more which is a notably large oxygen absorption amount for an oxygen absorber agent composition.

In this way, the amount of oxygen absorbed when maintained for 7 days at 25 degrees and 100% relative humidity is equal to or more than 230 ml/g and a 240ml/g or more capacity is obtained. Here the amount of oxygen absorbed vis a vis the weight of the oxygen absorber during 7 days is taken by making the oxygen absorber from a known weight of oxygen absorber composition wrapped in permeable packaging of sufficient gas permeability, by placing this in a bag made of gas barrier material filled with sufficient and a known volume of air having a relative humidity of 100 percent, and after maintaining this for 7 days, it is possible to obtain the figure through decrease of oxygen concentration in the bag.

As stated above, the oxygen absorber of the present invention is comprised of a main component of iron powder together with promoters made of alkali metal salts or alkali earth metal salts exhibiting low moisture transportation. The iron powder, alkali metal salts or alkali earth metal salts, are evenly mixed and become the contents of the oxygen absorber packaging: Oxygen absorber composition. Here, the mixture is not limited to a simple mixture, but as long as the mixture of the iron powder, alkali metal salts and alkali earth metal salts is sufficiently mixed any method is appropriate.

For example, since it is most efficient and desirable that the alkali metal salts or alkali earth metal salts are in physical contact with the iron powder, it is preferred that the alkali metal salts or alkali earth metal salts coat the surface of the iron particles.

As a method for making the alkali metal salts or alkali earth metal salts coat the surface of the iron particles, the method where iron particles are sprayed with an aqueous solution of the alkali metal salts or alkali earth metal salts and then dried is preferred.

In the oxygen absorber agent of the present invention, the aforementioned iron powder, alkali metal salts or alkali earth metal salts can have added to them other additives as necessary. For example, with the objective or providing odor inhibitors, dust inhibitors, hydrogen gas inhibitors or the like may be used and activated carbon, light ash or sodium bicarbonate my be mixed in optimal amounts.

When these additives are mixed in, because the size of the oxygen absorber agent increases and because the amount used of gas permeable membrane material used to form the packaging of the oxygen absorber agent becomes larger, the amount of these additives should be minimized to only what is necessary. As a concrete additive amount, to 100 parts by weight of the total of iron powder, alkali metal salts or alkali earth metal salts it is preferred to add between 35 parts by weight or less of additive and 25 parts by weight or less of additive is more preferred.

In particular, when using under conditions of high humidity, in the oxygen absorber agent compositions of the prior art, to prevent the formation of rust on the surface of the packaging material of the oxygen absorber composition and to maintain the oxygen absorption capacity, inorganic fillers such as silica or alumina were added. However, in the present invention, even when used under conditions of high humidity, the formation of rust on the surface of the packaging material of the oxygen absorber composition is prevented, and since the capacity of the oxygen absorber agent under conditions of high humidity is maintained, it is possible to dispense with the addition of inorganic fillers such as silica or alumina.

The oxygen absorber agent composition of the present invention can be used as an oxygen absorber packaged device by being enclosed in the gas permeable packaging material. As the packaging material for oxygen absorber composition used in such a way, if they are selected packaging materials used in oxygen absorber applications there are no particular limitations, however, materials with gas permeability as high as possible so as to make sure that a sufficient oxygen absorbing effect is obtained are preferred. For example, paper, pulp, cellulose and cloth made from synthetic fiber and the like or the unwoven cloth , perforated plastic films, a canister having a perforated surface and the like, or after adding calcium carbonate and the like stretched micro-porous film; or any two or more of these layered together may be given as examples. From among these unwoven polyethylene or polypropylene cloth or unwoven cloth layered with micro-porous film are preferred.

Additionally, the oxygen absorber agent composition of the present invention can be mixed with thermoplastic plastics and made into an oxygen absorbing film or sheet or the like. This film or sheet type oxygen absorber agent can be used as is, or covered with a gas permeable material. Moreover, they can be used as oxygen absorbing layers of multilayered oxygen absorbing film or sheet.

The oxygen absorber agent composition of the present invention, or the oxygen absorbing device made by packaging the oxygen absorber gent composition in gas permeable packaging materials may be kept by placing together with the product to be preserved in a gas barrier vessel with the product to be stored under a non oxygen atmosphere. The gas barrier material shape, for example, a metal can, a glass bottle, a plastic container or bag, and the like are not particularly limited if they can actually be scaled and have in fact gas barrier characteristics. Moreover, gas barrier packaging vessels or bags made from the laminate having gas permeability of 20 m1/m2 or less per 24hr per atm (25C, 50% RH) may be used. As this kind of layered device, polyethylene terephthalate / aluminum foil / polyethylene; stretched polypropylene / polyvinyl alcohol / polyethylene; polyvinylidene chloride coated stretched nylon / polyethylene and the like multilayered sheets or films, nylon type coaxially extruded multilayer sheets, and films may be given as examples.

The oxygen absorber agent composition of the present invention can obtain the initiation of oxygen absorbing activity at relative humidities of between 40% and 100%; and among these under high humidities those exceeding 70RH or more particularly 80-100 RH or even more particularly between 95 and 100 RH, all of the iron powder particles are puffed out in a granular shape, the surfaces of the particles are not covered with moisture, the oxygen absorbing reaction can effectively be promoted, and as particles clumping into masses is particularly avoided (in this invention) and the formation of rust water is prevented, a particular effect can be said to have been strikingly achieved. This is the effect not achieved by the commercially available iron type oxygen absorber agents where sodium chloride or calcium chloride have been used.

Additionally, even at high relative humidities, because it is possible to inhibit the transfer of moisture, it is also not necessary to add fillers and the degradation of the oxygen absorbing function that accompanies the transfer of moisture is prevented.

In other words, this invention is characterized in that a promoter having low moisture transportation characteristics is used and so the oxygen absorbing composition is created which does not create problems of rust water. In particular, oxidized iron is swollen into a millet puff state and oxidation of iron powder proceeds effectively. Preferable alkali metal salts or alkali earth metal salts have the characteristics that 5% aqueous solutions of the salts are in equilibrium with an atmosphere having a relative humidity of 99.0% or more at 25°C.

Therefore, one characteristic aspect of the present invention is in fact, an oxygen absorbing composition powder consisting of iron and promoter, therein a promoter is an alkali metal salt or an alkali earth metal salt which has a relative humidity of 99% or more in a 5% solution of the salt at 25°C, for 100 parts by weight of iron powder the promoter is added to the extent of 0.1 parts by weight or more, an oxygen absorber composition that does not contain an inorganic filler can be also made by using the promoter.

The oxygen absorber agent composition of the present invention when kept for 7 days under conditions of 25°C and 100%RH, this composition by weight can provide an oxygen absorbing capacity of more than 230ml/g and preferably 240ml/g.

The oxygen absorber agent composition of the present invention can be used ideally in applications calling for extreme humidity conditions.

For example, mochi (Japanese rice cakes), boiled rice, ham, and delicatessen foods can ideally be preserved for a long period of time. Moreover, bromine has no tendency to migrate in the gas phase and this oxygen absorber agent composition can be ideally used to preserve as oxygen absorber food and pharmaceutical materials.

## PRACTICE EXAMPLES

Below the practice examples are given to more concretely explain the present invention. However, the present invention is in no way limited by these practice examples. The evaluation methods used in evaluating the present invention are written below.

<5wt%salt aqueous solution equilibrium relative humidity>

Each type of salt was dissolved in water and adjusted until it constituted a 5-20% aqueous solution by weight.

These solutions and the relative humidities of atmospheres in in equilibrium condition were measured by a dewpoint type moisture activity measuring device (Decagon Devices Inc., Model 3TE). The results are in table 1. From table 1 for calcium bromide (CaBr2) the equilibrium relative humidity was particularly high and rate of water transfer from the atmosphere was low.

TABLE I

| 5% equilibrium relative humidity for weight aqueous solution | | | | |
|---|---|---|---|---|
| Concentration | CaBr2 | CaCl2 | NaBr | NaCl |
| Of Aqueous Solution | | | | |
| 5 wt% | 99.3% | 98.4% | 98.6% | 97.6% |
| 10 wt% | 98.5% | 97.0% | 97.2% | 94.4% |
| 20 wt% | 95.3% | 90.5% | 92.3% | 85.0% |

<Swelling Index of Oxygen Absorber Agent Composition>

Before carrying out the oxygen absorbing test, an oxygen absorber composition package was shaken by hand holding the short edge of a rectangular packaging and the oxygen absorber composition to the bottom side of the packaging.

The thickness of the bottom side was measured using calipers and is designated A. After performing the oxygen absorber experiment concerning the packaged oxygen absorber agent composition device, the same procedure was carried out and this time thickness B was obtained. The swelling index was calculated from the change of the thickness of the short side of the oxygen absorber agent composition package. The average was obtained from the swelling indices of five samples. The larger the swelling index, the more largely the oxygen absorbing composition has swollen.

$$\text{Swelling Index} = [(\text{Thickness B}) - (\text{Thickness A})]/(\text{Thickness A})$$

<Inhibition of rust formation on oxygen absorber composition packaged device>

During carrying out the oxygen absorbance tests, the observation of the production of rust on the gas permeable packaging material of the packaged oxygen absorber agent composition device inside the gas barrier bag was done.

The criteria are in Table 2.

Table 2

| - | No production of rust was observed. |
|---|---|
| ± | 1 to 2 pinpoint spots so small that they are seen only with close examination. |
| + | Quite a few pinpoint rust spots so small that they are seen only with close examination. |
| X | A easily visible occurrence of large rust. |

Example 1

0.5 grams of calcium bromide were added to 6.17 ml of water and dissolved and this aqueous solution were added to 100 g iron powder (average particle diameter 50 microns.) while mixing and the resulting mixture was dried and a powdery calcium bromide coated iron powder was obtained. 1.80g of the oxygen absorber composition powder thus obtained was placed in a small bag of 40 mm by 37 mm made of a laminated film of polyethylene terephthalate (PET) / linear low density polyethylene LLDPE / ethylene vinyl-acetate copolymer on one side and a gas permeable film of unwoven polyethylene cloth on the other side and the four sides of this small container were heat sealed to make a container comprising an oxygen absorber composition device.

Using this device, the following experiment was carried out. A moisture transport to the oxygen absorber was carried out at high humidity and later by testing the preservation of the oxygen absorbing function, the oxygen absorber was evaluated at extreme humidity.

A humidifying cotton was impregnated with ten (10) ml of water and the oxygen absorber composition device were placed into a 130 X 140 mm gas impermeable bag, while these were separated by means of a resin net, and the bag was sealed with 5 ml of air inside. The sealed bag was maintained at 35 degrees C in a constant temperature chamber and the oxygen absorber agent composition was allowed to uptake moisture. The sealed bag was then opened, the oxygen absorber composition device was removed and the additional weight was measured as transported moisture. This oxygen absorber agent which had been used to carry out moisture transport was placed in a gas barrier bag together with two hundred fifty (250 ml) milliliters of a mixture of oxygen and nitrogen where the oxygen content was adjusted to two (2%) percent and the bag was sealed and maintained in a constant temperature chamber at five (5 °C) degrees. The oxygen concentration was measured after 24 hours and the preservation of the oxygen absorption capacity after the transport of moisture was evaluated. The results are in Table 3.

The oxygen absorber agent of the present invention, even after 5-10 days under a high humidity atmosphere of 100%RH, with the transport of only a small volume of moisture, maintained an aggressive oxygen absorption capacity.

Comparative Examples 1-3

Except for the substitution of the same weight amount of calcium chloride, sodium bromide and sodium chloride in place of calcium bromide, oxygen absorber agent composition and an oxygen absorber agent composition packaged device were prepared in the same manner as in Example 1. Using the oxygen absorber agent composition packaged device the same experiment as in Example 1 was conducted and the water transport volume and the preservation of oxygen absorbing capacity were evaluated. The results are in Table 3. As shown in Table 3, by placing the device for 5-10 days under a high humidity atmosphere of 100%RH, there was transport of a large volume of moisture, and the oxygen absorption capacity was low.

Table 3.

| | | Example 1 | Comp Ex 1. | Comp Ex 2. | Comp Ex 3. |
|---|---|---|---|---|---|
| Salt added | | CaBr2 | CaCl2 | NaBr | NaCl |
| Moisture Transported for 5 days | H2O trans vol. O2 absorp capa after 24 hrs *1 | 0.124g 0.01% | 0.138g 0.02% | 0.256 g 1.57% | 0.296 g 1.37% |
| Moisture Transported for 7 days | H2O trans vol. O2 absorp capa after 24 hrs *1 | 0.149g 0.01% | 0.188g 0.32% | 0.259 g 1.73% | -- -- |
| Moisture Transported for 10 days | H2O trans vol. O2 absorp capa after 24 hrs*1 | 0.180g 0.01% | | | |

*1) oxygen concentration after 24 hours under initial conditions of five (5 degrees °C) degrees and five hundred (500 ml) of gas with initial O2 concentration of two (2%).]

Example 2

The following oxygen absorption experiment was conducted using the oxygen absorber agent composition packaged device made in Example 1. A cotton shape containing ten (10 ml) milliliters of water was placed in a 180mm X 250 mm bag made of polyvinylidene chloride coated stretched nylon/polyethylene laminated film and on top of this was placed a grid made of polypropylene, and then on top of that was placed the aforementioned oxygen absorber agent composition packaging device in such a way that it did not directly contact the water containing cotton and it was fixed by tape. The bag was sealed and hung placing the long side of the oxygen absorber composition device downward. Pinholes having a diameter of 2mm were opened in 4 places and the bag was maintained at twenty five (25°C) degrees until the oxygen absorbing agent was completely oxidized.

In this oxygen absorbing experiment, the results obtained from the index of expansion (swelling) of the oxygen absorber agent composition are shown in Table 4. The oxygen absorber agent composition packaged device's rust proofness was measured for each of 5 samples and the results given in table 5.

As shown in Table 4, the oxygen absorber composition of the present invention remained fluffy without experiencing clumping during the process of oxygen absorption and overall exhibited the millet puff type swelling and oxidation occurred evenly into the middle of the iron powder. Moreover in Table 5. the surface of the oxygen absorbing agent composition packaged device was not observed to be stained with rust.

Comparative Examples 4-7

Except that in place of the calcium bromide used in Example 1 the same amount of each (of the listed) types of metal chloride salts were used an oxygen absorber agent composition packaged device was made in the same way and the experiment described in Example 2 was performed upon each of them. Where a metal chloride was used, as shown in Table 4, clumping of the oxygen absorber agent composition was observed. Moreover, as shown in Table 5, rust was observed to have formed within three days and after 14 days on the surfaces of the oxygen absorber agent composition packaged device the occurrence of easily visible large areas of rusting was observed.

Comparative Examples 8-11

Except that in place of the calcium bromide used in Example 1 the same amount of each (of the listed) types of metal iodide salts were used an oxygen absorber agent composition packaged device was made in the same way and the experiment described in Example 2 was performed upon each of them. Where a metal iodide was used, as shown in Table 4, clumping of the oxygen absorber agent composition was observed. Moreover, as shown in Table 5, rust was observed to have formed within three days and after 14 days on the surfaces of the oxygen absorber agent composition packaged device the occurrence of easily visible large areas of rusting was observed.

Table 4

| Condition of oxygen absorber agent composition at 21 days of preservation, the swelling (expansion) index of the oxygen absorber agent composition. | | | |
|---|---|---|---|
| | Metal Salt | Condition of oxygen absorber agent composition after preservation | SwellingIndex of oxygen absorber after peservation |
| Example 2 | CaBr2 | Fluffy Condition | 0.9 |
| Comp Ex 4 | KCl | Clumped | 0.0 |
| Comp Ex 5 | NaCl | Clumped | 0.0 |
| Comp Ex 6 | CaCl2 | Clumped | 0.0 |
| Comp Ex 7 | MgCl2 | Clumped | 0.3 |
| Comp Ex 8 | KI | Clumped | 0.0 |
| Comp Ex 9 | NaI | Clumped | 0.0 |
| Comp Ex 10 | CaI2 | Clumped | 0.0 |
| Comp Ex 11 | MgI2 | Clumped | 0.0 |

Table 5

| Results of Evaluation of Rusting. | | | | | |
|---|---|---|---|---|---|
| | Metal Salt | 3 days Rust Check | 7 days Rust Check | 14 days Rust Check | 21 days Rusk Check |
| Example 2 | CaBr2 | ----- | ----- | ----- | ----- |
| Comp Ex 4 | KCl | +++++ | +++++ | xxxxx | xxxxx |
| Comp Ex 5 | NaCl | +++++ | +++++ | xxxxx | xxxxx |
| Comp Ex 6 | CaCl2 | +++++ | +++++ | xxxx+ | xxxx+ |
| Comp Ex 7 | MgCl2 | -+--- | ±+-++ | ±x-++ | xx-xx |
| Comp Ex 8 | KI | ----- | ±±±+± | +++++ | ++x++ |
| Comp Ex 9 | NaI | ±+--- | ±+±-+ | +++++ | +++++ |
| Comp Ex 10 | CaI2 | -+--- | +±+±+ | x±x±+ | x+xxx |
| Comp Ex 11 | MgI2 | -±±±- | +++++ | xxxxx | xxxxx |

Example 3

Except that four thousand (4000 ml) milliliters of air were contained in a bag and that it was kept on its side without opening pinholes an oxygen absorbing experiment was done in the same way as Example 2. Maintaining the temperature at 25 degrees °C using a zirconia type oxygen concentration measuring device, measurement of the oxygen absorbing volume was made at seven day intervals until 21 days. Additionally, at 21 days, the gas barrier bag was opened and the condition of the oxygen absorbing agent composition and the condition of rust appearing on the surface of the gas permeable packaging material were determined as shown in table 2. The results are shown in Table 6.

As shown in Table 6, the amount of oxygen absorption as part of the weight of the oxygen absorber agent composition at 7 days was more than 230 ml O2/g, at 14 days it passed 250 ml O2/g and at 21 days it was more than 270ml O2/g. Even after preserving for 21 days, the oxygen absorbing composition kept fluffy and clumping of the oxygen absorber agent composition and the formation of rust on the surface of the gas permeable packaging material were not observed.

Comparative Examples 12-15

Except that in place of the calcium bromide used in Example 1 the same amount of each (of the listed) types of metal chloride salts were used an oxygen absorber agent composition packaged device was made in the same way and the experiment described in Example 3 was performed upon each of them. Where a metal chloride was used, as shown in Table 6, then compared to where the metal bromide salt was used, less absorption of oxygen was observed. After 21 days of preservation, the oxygen absorber agent composition kept fluffy and the clumping of the oxygen absorber agent composition and the occurrence of + level rusting on the surfaces of the oxygen absorber agent composition packaged device was observed.

Comparative Examples 16-19

Except that in place of the calcium bromide used in Example 1 the same amount of each (of the listed) types of metal iodide salts were used an oxygen absorber agent composition packaged device was made in the same way and the experiment described in Example 3 was performed upon each of them. Where a metal iodide was used, as shown in Table 6, then compared to where the metal bromide salt was used, less absorption of oxygen was observed. After 21 days of preservation, the clumping of the oxygen absorber agent composition and the occurrence of + levels of rusting on the surfaces of the oxygen absorber agent composition packaged device was observed.

Table 6

| Oxygen absorber agent composition oxygen absorption amount, condition and the formation of rust on the oxygen absorber agent composition packaging material | | | | | | |
|---|---|---|---|---|---|---|
| | Metal | Oxygen Absorption (mlO2/g) | | | 21 days condition of oxygen absorber agent composition | 21 days rusting conditions |
| | | 7 days | 14 days | 21 days | | |
| Example 3 | CaBr2 | 246 | 279 | 281 | fluffy | ----- |
| Comp Ex 12 | KCl | 199 | 224 | 235 | clumped | +++++ |
| Comp Ex 13 | NaCl | 208 | 233 | 245 | clumped | +++++ |
| Comp Ex 14 | CaCl2 | 207 | 234 | 265 | clumped | +++++ |
| Comp Ex 15 | MgCl2 | 191 | 213 | 225 | clumped | +++++ |
| Comp Ex 16 | KI | 139 | 167 | 187 | clumped | +++++ |
| Comp Ex 17 | NaI | 139 | 164 | 186 | clumped | +++++ |
| Comp Ex 18 | CaI2 | 154 | 188 | 210 | clumped | +++++ |
| Comp Ex 19 | MgI2 | 127 | 148 | 167 | clumped | +++++ |

Example 4

The following application experiment was carried out. In a barrier bag (polyvinylidene chloride coated stretched nylon/polyethylene laminate film, size 220 mm X 330 mm) to which had been added 1050 grams of cooked rice, a single oxygen absorber agent composition packaged device made in the same way as in Example 1 was placed on the rice and the bag was sealed. After the sealed vessel was preserved at 25 degrees C for thirty (30) days, just as the oxygen content measured in the bag was measured to be less than 0.1%, the taste of the cooked rice was not deteriorated. When the oxygen absorber agent composition packaged device was taken out and analyzed, there was no rust observed. On the part of the rice in contact with the oxygen absorber composition packaged device, no abnormality was observed upon visual inspection, and although testing by the potassium rhodanide method was performed no rusting reaction was detected.
The oxygen absorber agent composition used (100 parts by weight iron powder (1.79g) : 0.5 parts by weight calcium bromide ) with packing density of 3.20g/ml and the amount of packaging material used for one oxygen absorber agent composition packaged device is on each side 14.8 cm2.

Because no inorganic filler was mixed with the oxygen absorber agent composition, the amount of the packaging material as compared with the prior type of oxygen absorber containing 1.79 g of iron powder, promoter and inorganic filler (Comparative Example 20) could be as much as 30% less.

Comparative Example 20

Using calcium chloride in the same way that calcium bromide was used in example 4, and adding a silica filler and additive, the prior art type of oxygen absorber agent composition was prepared. Between calcium bromide and calcium chloride, calcium bromide has the higher oxidation reaction efficiency (Table 6) so it is necessary to supplement the amount of iron powder so that the oxygen absorption capacity is the same on the seventh day. That is to say, based on the composition of Example 4, an oxygen absorber agent composition in which the inclusion of an iron powder was in the amount of 2.12 grams (1.79 X 246/207) was obtained.

The oxygen absorber agent composition used (Iron powder 100 parts by weight (2.12 grams) : calcium chloride 0.4 parts by weight : inorganic filler 5.4 parts by weight) had a packing density of 2.90 g/ml and the area on each side for the amount of packaging material used in relation to this amount of oxygen absorber agent composition was 20.5 cm2.

Using the oxygen absorber agent composition packaged device thus obtained, an experiment of the same type as was conducted in Example 4 was conducted. After 30 days of preservation, when the oxygen content inside the bag was measured at having fallen to less than 0.1 %, the taste of the rice was not deteriorated. However, on the surfaces of the packaging material of the oxygen absorber composition packaging material device, rust was observed and even on the part of rice in contact with the oxygen absorber composition packaged device, tests carried out in accordance with the rodankari method detected iron.

POSSIBILITY OF INDUSTRIAL USE

The oxygen absorber agent composition of the present invention,. During the oxygen absorbing process, overall iron powder swells in millet puff consistency avoiding clumping and the iron powder is effectively available for oxygen absorption and water does not cover the surface of the iron particles and as a result oxidation occurs even in the internal portions of the powder masses, and this oxygen absorber agent composition absorbs a high volume of oxygen by weight. Additionally, since inorganic fillers are not mixed in, even if they are used for a long period of time under high humidity conditions, the oxygen absorption capacity can continue to be manifested. The oxygen absorber agent composition of the present invention, in particular, under high humidity conditions exceeding 70% RH, or specifically 80-100% RH or even more 95-100% RH will continue to manifest this striking characteristic.

Moreover, oxygen absorber agent composition packaged devices using the oxygen absorber agent composition of the present invention, can uniquely inhibit the clumping of upon powder and can prevent the formation of rust on the surfaces of the packaged device. Moreover even if the humidity of the atmosphere used is very high, the production of rust water by the seeping out of iron rust through the permeable packaging material and the contamination of the protected food by transferred rust product do not occur. Among these, when relative humidity exceeds 70% RH or more particularly 80-100% RH and further 95-100% RH this quality is most striking.

The oxygen absorber agent composition packaged device of the present invention can be made compact, can be used for long periods of time under very humid conditions manifesting oxygen absorbing capacity. Pharmaceuticals, foods and the like over long periods of time can be preserved while the permeable surfaces of the oxygen absorber agent composition packaged devices will not be stained with rust. Particularly, it is possible to manifest large oxygen absorbing capacity at high humidity even when inorganic fillers are not added. Volumes observed for oxygen absorber agents having the same oxygen absorbing capacity as those obtained by mixing in inorganic fillers in the prior art oxygen absorbers are reduced and as a result, the amount of packaging materials used in oxygen absorber agent compositions packaged devices can be reduced.

By the above the present invention offers an oxygen absorber agent composition with an exceedingly high utility.

**Claims**

**1.**    An oxygen absorber composition comprising 100 parts by weight iron powder and 0.1 parts by weight or more of a promoter comprising an alkali metal salt or an alkali earth metal salt having low moisture transportation characteristics.

2. An oxygen absorber composition according to claim 1 wherein the alkali metal salt or the alkali earth metal salt has a characteristics that its 5% aqueous solution is in equilibrium with an atmosphere having a relative humidity of 99.0% RH or more at 25°C.

3. An oxygen absorber composition according to claim 1 wherein the promoter is calcium bromide.

4. An oxygen absorber composition according to claim 1 for use under high humidity conditions.

5. An oxygen absorber composition according to claim 1 wherein the amount of promoter mixed to 100 parts by weight of iron powder is between 0.5 and 0.8 parts by weight.

6. An oxygen absorber composition according to claim 1 wherein an inorganic filler is dispensed with.

7. An oxygen absorber agent composition according to claim 1 wherein when maintained at 25°C at 100% RH for seven days, the amount of oxygen absorbed is with regard to the amount of oxygen absorber agent composition 230 ml/g or more.

8. An oxygen absorber composition packaged device where the an oxygen absorber composition described in any of claims 1-6 is packaged within a gas permeable material.

9. An oxygen absorber composition packaged device for use in the atmosphere of high humidity where the an oxygen absorber composition described in any of claims 1-6 is packaged within a gas permeable material.

10. A method of removing oxygen within a gas barrier vessel under high humidity conditions exceeding 70% RH using the oxygen absorber agent composition packaged device described in claim 8.

**European Patent Office**

**EUROPEAN SEARCH REPORT**

Application Number

EP 04 01 9007

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X, L | PATENT ABSTRACTS OF JAPAN vol. 2003, no. 12, 5 December 2003 (2003-12-05) & JP 2003 340274 A (MITSUBISHI GAS CHEM CO INC), 2 December 2003 (2003-12-02) * abstract * | 1-10 | A23L3/3436 B01J20/02 B01J20/04 |
| X | EP 0 481 730 A (MITSUBISHI GAS CHEMICAL CO) 22 April 1992 (1992-04-22) * page 6, line 2 - line 31 * | 1-4,7-10 | |
| X | EP 0 329 897 A (MITSUBISHI GAS CHEMICAL CO) 30 August 1989 (1989-08-30) * page 5, line 30 - line 51 * | 1-4,7-10 | |
| P,X | EP 1 344 641 A (MITSUBISHI GAS CHEMICAL CO) 17 September 2003 (2003-09-17) * column 6, line 26 - line 49 * | 1-4,7 | |
| X | US 4 230 595 A (OKITSU HIROYUKI ET AL) 28 October 1980 (1980-10-28) * column 6, line 10 - line 36 * | 1-4,7-10 | TECHNICAL FIELDS SEARCHED (Int.Cl.7) |
| A | PATENT ABSTRACTS OF JAPAN vol. 017, no. 017 (C-1016), 13 January 1993 (1993-01-13) & JP 04 244228 A (MITSUBISHI GAS CHEM CO INC), 1 September 1992 (1992-09-01) * abstract * | | B01J A23L B01D |

The present search report has been drawn up for all claims

| Place of search | Date of completion of the search | Examiner |
|---|---|---|
| The Hague | 3 December 2004 | Hilgenga, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 01 9007

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2004

| Patent document cited in search report | | Publication date | Patent family member(s) | | Publication date |
|---|---|---|---|---|---|
| JP 2003340274 | A | 02-12-2003 | NONE | | |
| EP 0481730 | A | 22-04-1992 | JP | 4150863 A | 25-05-1992 |
| | | | DE | 69128597 D1 | 12-02-1998 |
| | | | DE | 69128597 T2 | 27-08-1998 |
| | | | EP | 0481730 A2 | 22-04-1992 |
| | | | JP | 3139509 B2 | 05-03-2001 |
| | | | JP | 5003776 A | 14-01-1993 |
| | | | US | 5241149 A | 31-08-1993 |
| EP 0329897 | A | 30-08-1989 | CA | 1326396 C | 25-01-1994 |
| | | | DE | 3878889 D1 | 08-04-1993 |
| | | | DE | 3878889 T2 | 05-08-1993 |
| | | | EP | 0329897 A2 | 30-08-1989 |
| | | | KR | 9104344 B1 | 26-06-1991 |
| | | | US | 4996068 A | 26-02-1991 |
| | | | US | 5085878 A | 04-02-1992 |
| | | | JP | 2000413 A | 05-01-1990 |
| | | | JP | 2754595 B2 | 20-05-1998 |
| EP 1344641 | A | 17-09-2003 | EP | 1344641 A2 | 17-09-2003 |
| | | | JP | 2003334049 A | 25-11-2003 |
| | | | US | 2003175465 A1 | 18-09-2003 |
| US 4230595 | A | 28-10-1980 | JP | 54120287 A | 18-09-1979 |
| | | | JP | 62041780 B | 04-09-1987 |
| | | | JP | 54122687 A | 22-09-1979 |
| | | | JP | 1141917 C | 13-04-1983 |
| | | | JP | 54159385 A | 17-12-1979 |
| | | | JP | 57031447 B | 05-07-1982 |
| | | | JP | 1332962 C | 28-08-1986 |
| | | | JP | 55020660 A | 14-02-1980 |
| | | | JP | 60057894 B | 17-12-1985 |
| | | | JP | 1141920 C | 13-04-1983 |
| | | | JP | 55022323 A | 18-02-1980 |
| | | | JP | 57031450 B | 05-07-1982 |
| | | | DE | 2966213 D1 | 03-11-1983 |
| | | | EP | 0004073 A2 | 19-09-1979 |
| JP 04244228 | A | 01-09-1992 | JP | 3132015 B2 | 05-02-2001 |